# EUROPÄISCHE PATENTSCHRIFT

(11) **EP 2 843 447 B1**
(45) Veröffentlichungstag und Bekanntmachung des Hinweises auf die Patenterteilung: **01.06.2016**
(21) Anmeldenummer: 13181769.4
(22) Anmeldetag: 27.08.2013
(51) Int. Cl.: G01V 8/20, G01D 11/24, F16P 3/14, G01D 5/347

(54) **Lichtgitter**
Light grid
Barrière lumineuse

(43) Veröffentlichungstag der Anmeldung: 04.03.2015
(73) Patentinhaber: SICK AG, 79183 Waldkirch (DE)
(72) Erfinder: Dreher, Felix, 79350 Sexau (DE); Eisele, Florian, 79108 Freiburg (DE); Klingelhöfer, Dr., Christian, 79110 Freiburg (DE); Pfister, Michael, 79199 Kirchzarten (DE)
(74) Vertreter: Hehl, Ulrich

(56) Entgegenhaltungen:
- EP-A1- 2 273 287
- EP-A1- 2 592 608
- DE-A1-102007 014 170
- DE-A1-102011 050 896
- DE-U1-202007 005 332
- US-A1- 2002 190 166
- US-A1- 2003 106 992
- US-A1- 2005 122 590
- US-A1- 2007 069 114

## Beschreibung

Die vorliegende Erfindung betrifft ein Lichtgitter mit einem Sensorkopfgehäuse gemäß dem Oberbegriff von Anspruch 1.

Bekannte optoelektronische Sensoranordnungen wie beispielsweise Lichtschranken, Lichttaster, Lichtvorhänge und Lichtgitter weisen ein Gehäuse auf, in welchem wenigstens ein Lichtsender und/oder ein Lichtempfänger angeordnet ist, wobei das Gehäuse in einer Seitenwand wenigstens eine Frontscheibe aufweist, welche für das von dem Lichtsender ausgesandte Licht oder das von dem Lichtempfänger detektierte Licht durchlässig ist. Dabei bezieht sich der Begriff "Licht" nicht nur auf sichtbares Licht, sondern auf elektromagnetische Wellen unterschiedlichster Frequenzen, die für den Aufbau einer optoelektronischen Sensoreinrichtung geeignet sind. Je nach Ausgestaltung der optoelektronischen Sensoranordnung können sich in dem Gehäuse entweder nur ein oder mehrere Lichtsender oder nur ein oder mehrere Lichtempfänger befinden, wie beispielsweise bei Einweglichtschranken oder Einweglichtgittern. Es ist jedoch auch möglich, in einem Gehäuse der optoelektronischen Sensoranordnung sowohl wenigstens einen Lichtsender als auch wenigstens einen Lichtempfänger anzuordnen, wie beispielsweise bei Lichttastern, Reflexionslichtschranken oder Reflexionslichtgittern. Derartige optoelektronische Sensoranordnungen werden entweder an Gebäudewänden oder auch an Rahmengestellen von Maschinen oder Anlagen befestigt, um entsprechende Überwachungsbereiche abzusichern. Dazu muss an dem Gehäuse eine entsprechende Befestigungsvorrichtung angeordnet werden, welche in der Regel einen hohen Platzbedarf aufweist.

Die DE 10 2007 014 170 A1 betrifft eine optoelektronische Sensoranordnung mit einem Gehäuse, in welchem wenigstens ein Lichtsender und/oder ein Lichtempfänger angeordnet ist, wobei das Gehäuse an oder in einem Rahmenprofil angeordnet ist, wobei an dem Gehäuse und/oder dem Rahmenprofil wenigstens ein Befestigungselement zur Befestigung des Gehäuses an oder in dem Rahmenprofil und wenigstens ein erstes Kontaktelement zur Herstellung eines elektrischen Kontaktes zwischen dem Gehäuse und dem Rahmenprofil angeordnet ist und wobei an dem Rahmenprofil wenigstens ein zweites Kontaktelement zur elektrischen Kontaktierung angeordnet ist.

Zwar erlaubt das Befestigungselement der DE 10 2007 014 170 A1 eine Ausrichtung des Gehäuses relativ zu dem Rahmenprofil, um eine Justierung der optoelektronischen Sensoranordnung zu ermöglichen, jedoch ist eine Ausrichtung aufgrund des Kontaktelements, beispielsweise nach Art einer SIM-Karte sehr stark eingeschränkt und nur innerhalb des Rahmenprofils in drei Achsen möglich.

Die EP 2 273 287 A1 offenbart eine optoelektronische Sensoranordnung mit wenigstens einem Lichtsender und/oder wenigstens einem Lichtempfänger, mindestens einer Steuerelektronik für den wenigstens einen Lichtsender und/oder Lichtempfänger und mindestens einer Auswerteelektronik für vom mindestens einen Lichtempfänger empfangenen Signale, wobei die optoelektronische Sensoranordnung ein Optikgehäuse, das mindestens den wenigstens einen Lichtsender und/oder den wenigstens einen Lichtempfänger und die mindestens eine Steuerelektronik für den wenigstens einen Lichtsender und/oder Lichtempfänger beinhaltet, und ein mit diesem lösbar mechanisch und elektrisch verbundenes Gondeigehäuse, das mindestens die Auswerteelektronik enthält, aufweist.

Die US 2007/0069114 A1 offenbart ein kaskadierbares Lichtgitter.

Die US 2003/0106992 offenbart ein Lichtgitter mit einer halbrunden Gehäuseform und zwei Nuten, wobei ein Lichtgitterhalter vorgesehen ist, der in die Nuten eingreift und eine Drehung des Lichtgitters entlang einer Längsachse ermöglicht.

Die US 2005/0122590 A1 offenbart einen Halter für ein Lichtgitter, der eine Drehung des Lichtgitters entlang einer Längsachse ermöglicht.

Die EP 2 592 608 A1 offenbart eine Einheit zur automatischen Winkeljustage einer Objekterkennungseinheit.

Der Erfindung liegt daher die Aufgabe zu Grunde, die Nachteile des oben genannten Standes der Technik zu vermeiden, ein sicheres modulares Lichtgitter und eine bessere Justagemöglichkeit für Lichtgitter bereitzustellen.

Die Aufgabe wird nach Anspruch 1 gelöst durch ein Lichtgitter mit einem ersten Sensorkopfgehäuse mit einer Gehäuselängsachse mit mehreren Lichtsendern und/oder mehreren Lichtempfängern, mindestens einer ersten Auswerteeinheit, welche in dem Sensorkopfgehäuse angeordnet ist zur Auswertung von Empfangssignalen und zur Ausgabe von analogen oder digitalen Empfangsdaten, wobei ein zweites Gehäuse vorgesehen ist, das mit dem Sensorkopfgehäuse lösbar verbunden ist, wobei das Sensorkopfgehäuse mittels einer ersten elektrischen Schnittstelle nur mit dem zweiten Gehäuse verbindbar ist und das zweite Gehäuse mittels einer zweiten elektrischen Schnittstelle an eine Maschinensteuerung anschließbar ist, wobei das zweite Gehäuse eine Ansteuereinheit für die Lichtsender und/oder eine zweite Auswerteeinheit zur Weiterverarbeitung der Empfangsdaten und zur Ausgabe eines Objektfeststellungssignals aufweist, wobei die Ansteuereinheit und/oder die Auswerteeinheit als sichere Steuerungen im Sinne von Maschinensicherheit ausgelegt sind und das Sensorkopfgehäuse um die Gehäüselängsachse drehbar in dem zweiten Gehäuse gelagert ist, wobei das zweite Gehäuse eine Aufnahme mit einem teilrunden Gehäusequerschnitt aufweist für die Aufnahme des Sensorkopfgehäuses, wobei die Aufnahme im Querschnitt einen Kreisabschnitt bildet, wobei der Kreisabschnitt einen Winkel von mehr als 180° aufweist, wobei das Sensorkopfgehäuse in der Aufnahme angeordnet ist und von der Aufnahme zunächst durch Formschluss und zusätzlich durch Kraftschluss gehalten ist.

Das zweite Gehäuse nimmt das Sensorkopfgehäuse nach Art eines Halters auf. Das zweite Gehäuse weist neben den mechanischen Aufnahmen für das Sensorkopfgehäuse noch eine integrierte elektrische Verbindungstechnik auf. Dabei ist wesentlich, dass das Sensorkopfgehäuse mechanisch und elektrisch nur mit dem zweiten Gehäuse verbunden werden kann und nicht über die erste Schnittstelle direkt mit einer Maschinensteuerung.

Optional weißt das zweite Gehäuse noch eine integrierte elektrische Schutzbeschaltung auf, um das Sensorkopfgehäuse vor elektrischen Störungen, wie beispielsweise elektromagnetischen Einflüssen zu schützen.

Dabei kann das zweite Gehäuse jeweils verschiedene Sensorkopfgehäuse mit unterschiedlicher Länge aufnehmen. Das Sensorkopfgehäuse kann in einer sehr großen Vielfalt von unterschiedlichen Schutzfeldhöhen angeboten werden, die beispielsweise durch Sensorkopfgehäuselängen von ca. 100 mm oder ca. 150 mm bis mehr als ca. 2000 mm realisiert werden, wobei die Längenschritte 100 mm oder 150 mm betragen.

Gemäß der Erfindung werden zunächst lediglich Empfangsdaten und optional. Parametrierdaten einer Vorauswertung im Sensorkopf zwischen dem Sensorkopfgehäuse und dem zweiten Gehäuse übertragen. Dadurch ist die erste elektrische Schnittstelle einfach aufgebaut. Eine Weiterverarbeitung der Empfangsdaten erfolgt nicht in dem Sensorkopf, sondern in einer nachgeordneten Einheit. Das zweite Gehäuse kann daher für eine Vielzahl von unterschiedlichen Lichtgitterlängen eingesetzt werden und die erste elektrische Schnittstelle speziell auf die Übertragung von Empfangsdaten angepasst werden. Bei den Empfangsdaten kann es sich um analoge oder digitale Empfangsdaten handeln.

Da das Sensorkopfgehäuse neben den Lichtsendern und/oder den Lichtempfängern lediglich eine Auswerteeinheit aufweist, die eine Auswertung der Empfangssignale zu Empfangsdaten durchführt, kann das Sensorkopfgehäuse sehr kompakt hergestellt werden.

Weiter ist das Sensorkopfgehäuse modular einsetzbar. D. h. das Sensorkopfgehäuse ist unabhängig von der elektrischen Anbindung des zweiten Gehäuses an die Maschinensteuerung und der erforderlichen logischen Steuersigriale, da diese Signale erst durch eine Verarbeitung oder weitere Auswertung der Empfangsdaten gebildet werden.

Die zweite elektrische Schnittstelle dient zur Verbindung mit einer Maschinensteuerung. Dabei werden beispielsweise die Empfangsdaten der ersten Schnittstelle an eine Maschinensteuerung weitergegeben, in welcher die Empfangsdaten direkt ausgewertet werden.

In der Erfindung weist das zweite Gehäuse eine Ansteuereinheit für die Lichtsender und/oder eine zweite Auswerteeinheit zur Weiterverarbeitung der Empfangsdaten und zur Ausgabe eines Objektfeststellungssignals auf. Diese Ansteuereinheit bzw. zweite Auswerteeinheit stellt die von der Anwendung benötigten Signale auf der zweiten Schnittstelle bereit. Dies können beispielsweise ein oder mehrere, insbesondere zwei sicherheitsgerichtete Schaltausgänge der zweiten Auswerteeinheit sein. Weiter kann die zweite Auswerteeinheit auf der zweiten Schnittstelle Meldesignale, wie beispielsweise Verschmutzungssignale oder Signale zur empfangenen Lichtstrahlstärke aufweisen. Weiter kann die zweite Auswerteeinheit auch Signaleingänge aufweisen, beispielsweise Eingänge für eine Schützkontrolle, oder beispielsweise Eingänge für eine Taktsteuerung. Die Ansteuereinheit erhält beispielsweise über die zweite Schnittstelle Steuersignale, beispielsweise um eine Codierung der Sendesignale einzustellen.

Die Ansteuereinheit bzw. die zweite Auswerteeinheit sind als sichere elektronische Steuerungen zweikanalig ausgebildet und entsprechen den Safety Integritiy Leveln 2 oder 3 (SIL2 oder SIL3) entsprechend der Norm IEC61508. Die Sicherheitsnormen für optoelektronische Sensoren bzw. berührungslos wirkende Schutzeinrichtungen, beispielsweise die IEC61496 brauchen dabei nicht berücksichtigt werden, da das zweite Gehäuse keine optischen Teile aufweist.

Das Sensorkopfgehäuse stellt einen optoelektronischen Sensor, bzw. eine berührungslos wirkende Schutzeinrichtung dar, die nach der Norm IEC61496 als sicherer Sensor ausgebildet ist. Hierzu ist die erste Auswerteeinheit beispielsweise zweikanalig ausgeführt.

Das erfindungsgemäße Lichtgitter, bestehend aus dem Sensorkopfgehäuse und dem zweiten Gehäuse stellt demnach auch hinsichtlich der sicherheitstechnischen Zulassung und Prüfung ein modulares System dar, bei dem das Sensorkopfgehäuse und das zweite Gehäuse unabhängig voneinander sicherheitstechnisch geprüft und zugelassen werden können, wodurch sich beispielsweise Änderungen in der zweiten Auswerteeinheit in dem zweiten Gehäuse nicht auf die Zulassung des Sensorkopfgehäuses auswirken.

In Weiterbildung der Erfindung weist das zweite Gehäuse eine Speichereinheit auf. In dieser Speichereinheit können beispielsweise die Parametrierdaten gespeichert sein. Ein Beispiel für diese Parametrierdaten ist eine Schaltschwelle für die Entscheidung, ob ein Lichtstrahl ausreichend stark empfangen wurde. Weiter können die Parametrierdaten allgemeine Geräteinformationen darstellen, wie beispielsweise Information zu einem Fehlerspeicher, beispielsweise eine Seriennummer, Typ oder Ausführung des Sensorkopfes. Die Speichereinheit ist mit der Ansteuereinheit bzw. der zweiten Auswerteeinheit elektronisch verbunden.

Gemäß einer bevorzugten Ausführungsform ist die erste elektrische Schnittstelle zwischen dem Sensorkopfgehäuse und dem zweitem Gehäuse durch Schleifkontakte gebildet. Durch die Schleifkontakte wird eine galvanische Verbindung zwischen Sensorkopfgehäuse und zweitem Gehäuse gebildet. Durch die Schleifkontakte ist eine relative Bewegung zwischen Sensorkopfgehäuse und zweitem Gehäuse möglich. Schleifkontakte sind sehr preiswert herstellbar. Da die Schleifkontakte auch nur während der Justage des Sensorkopfgehäuses bewegt werden, ist auch kein hoher Verschleiß vorhanden, weshalb die Schleifkontakte auch wenig störanfällig sind. Bei der Verwendung von Schleifkontakten kann das Sensorkopfgehäuse sehr kompakt ausgeführt werden, da keine Öffnung für ein Kabel vorgesehen werden muss.

Jedoch kann es auch vorgesehen sein, die erste elektrische Schnittstelle durch eine galvanisch getrennte Kopplung zu realisieren. Auch durch eine galvanisch getrennte Kopplung ist eine relative Bewegung zwischen Sensorkopfgehäuse und zweitem Gehäuse möglich. Beispielsweise wird eine induktive oder eine kapazitive Kopplung oder auch eine optische Kopplung vorgesehen, um die Schnittstellensignale der zweiten Schnittstelle zu übertragen.

In einer alternativen Weiterbildung der Erfindung ist die elektrische Schnittstelle durch ein Kabel mit mindestens einem Stecker gebildet. Das Kabel stellt eine bewegliche galvanische Verbindung zwischen dem Sensorkopfgehäuse und dem zweiten Gehäuse dar. Das Kabel oder eine Leitung bietet gegenüber einem Schleifkontakt eine höhere Kontaktsicherheit und gegenüber einer galvanisch getrennten Kopplung eine preiswerte Alternative.

In Weiterbildung der Erfindung weist das zweite Gehäuse eine dritte oder vierte oder noch weitere Schnittstellen auf. An diese weiteren Schnittstellen oder Anschlüsse können weitere Signale eingelesen und/oder ausgeben werden. So können an das zweite Gehäuse Muting-Sensoren, weitere kaskadierbare Teillichtgittersysteme oder andere Zusatzsensoren angeschlossen werden. Die dritte oder vierte oder weitere Schnittstellen können beispielsweise als Kabelschwanz mit Standard-Steckern ausgeführt sein.

In einer besonderen Ausführung ist an die dritte oder vierte Schnittstelle ein weiteres Sensorkopfgehäuse, insbesondere ein kaskadierbares Teillichtgitter angeschlossen zur Bildung einer Lichtgitterkaskade mit den Sensorkopfgehäusen. Dadurch ist nur ein einziges zweites Gehäuse notwendig, um eine Lichtgitterkaskade zu bilden, welche aus mehreren Sensorkopfgehäusen, beispielsweise zwei oder drei Sensorkopfgehäusen gebildet wird.

In Weiterbildung der Erfindung ist an die dritte oder vierte Schnittstelle wenigstens ein Sicherheitssensor mittels redundanter Sicherheitsausgänge anschließbar. Bei dem Sicherheitssensor kann es sich um eine sichere Lichtschranke, eine sichere Mehrstrahllichtschranke, oder um nicht optische Sicherheitssensoren, wie beispielsweise kapazitive oder induktive Sicherheitssensoren handeln. Dadurch sind die unterschiedlichen Sensorinformationen in dem zweiten Gehäuse zentral verfügbar:
In Weiterbildung der Erfindung ist an die dritte oder vierte Schnittstelle wenigstens ein Sicherheitslasercanner mittels redundanter Sicherheitsausgänge anschließbar. In vielen Anwendungen ist es notwendig, dass eine komplexe Gefahrbereichsabsicherung durch ein Lichtgitter und einen Sicherheitslaserscanner gebildet wird. Der Sicherheitslaserscanner dient dabei als Hintertretschutzsensor zu dem Lichtgitter. Durch den Sicherheitslaserscanner wird also überwacht, ob sich eine Person hinter dem Lichtgitter in einem Gefahrenbereich befindet.

In Weiterbildung der Erfindung ist an der dritten oder vierten Schnittstelle wenigstens ein Sensor, insbesondere wenigstens ein Mutingsensor mittels wenigstens einem Ausgang anschließbar. Dadurch kann das Lichtgitter mittels weiterer Sensoren ergänzt werden. Beispielsweise können einzelnen Sensoren, insbesondere Lichtschranken eingesetzt werden, um Objekte, die in das Schutzfeld eindringen, vorab zu erkennen und ggf. zu klassifizieren. Beispielsweise werden Sensoren, insbesondere Lichtschranken dazu verwendet, um das Lichtgitter zu überbrücken. Derartige Überbrückungssensoren werden Mutingsensoren genannt. Die Mutingsensoren sind dabei derart angeordnet, dass beispielsweise zulässige Objekte erkannt werden und diese dazu führen, dass die Schutzfunktion des Lichtgitters unterdrückt wird, um ein Passieren des Objektes zu ermöglichen. Personen, die das Lichtgitter passieren wollen, werden jedoch von den Mutingsensoren als unzulässige Objekte erkannt, wodurch die Schutzfunktion des Lichtgitters nicht unterdrückt wird.

In einer besonderen Ausführungsform weist das zweite Gehäuse Anzeigeelemente auf. Die Anzeigeelemente können durch eine oder mehrere Leuchdioden und/oder durch eine oder mehrere Sieben-Segmentanzeigen und/oder durch eine LCD-Anzeige gebildet sein. Auch andere Anzeigetechnologien, wie beispielsweise organische Anzeigemittel wie OLED sind erfindungsgemäß mit umfasst.

Weiter kann das zweite Gehäuse Bedienelemente aufweisen. Die Bedienelemente können für die Konfiguration oder zur Abfrage von Statusmeldungen vorgesehen sein. Die Bedienelemente können durch Tasten oder Schalter gebildet sein. Dabei sind Folientaster/-schalter oder auch Berührungstasten vorgesehen, welche kapazitiv oder optisch funktionieren.

In Weiterbildung der Erfindung ist die in der Speichereinheit des zweiten Gehäuses gespeicherte Parametrierung durch Übertragungsmittel auf ein weiteres an der dritten oder vierten Schnittstelle temporär angeschlossenes zweites Gehäuse übertragbar, wobei der Übertragungsvorgang durch eine Codeeingabe an den Bedienelementen startbar ist. Dadurch kann die Parametrierung des zweiten Gehäuses einfach auf ein weiteres zweites Gehäuse übertragen werden. Die Konfiguration des zweiten Gehäuses wird praktisch ,geklont'. Dies ist beispielsweise sinnvoll, um ein Austauschgerät für einen Ausfall bereit zu haben, oder um eine parallele zweite Anwendung mit dem Lichtgitter zu erstellen. Gemäß einer besonderen Ausführungsform ist die zweite Schnittstelle durch einen Feldbus, insbesondere durch einen sicheren Feldbus gebildet. Bekannte Feldbussysteme sind beispielsweise Profibus oder Interbus. Beispiele für sichere Feldbusse sind Profibus Safe, Interbus Safe oder sichere Feldbusse von anderen Herstellern. Die zweite Schnittstelle kann darüber hinaus auch durch ein sicheres Ethernet oder durch eine fachübliche Sensorverbindung wie IO-Link nichtsicherheitsgerichtet oder sicherheitsgerichtet erfolgen. Weitere Beispiele für die zweite Schnittstelle sind ASI oder ASI Safety.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1a, 1b und 2: ein erfindungsgemäßes Lichtgitter mit Sensorkopfgehäuse und zweitem Gehäuse;
- Figur 3: ein erfindungsgemäßes Lichtgitter mit Sensorkopfgehäuse und zweitem Gehäuse vor einer Montage;
- Figur 4: ein erfindungsgemäßes zweites Gehäuse;
- Figur 5 bis 7: eine Montage des erfindungsgemäßen Lichtgitters mit Sensorkopfgehäuse in dem zweiten Gehäuse;

In den nachfolgenden Figuren sind identische Teile mit identischen Bezugszeichen versehen.

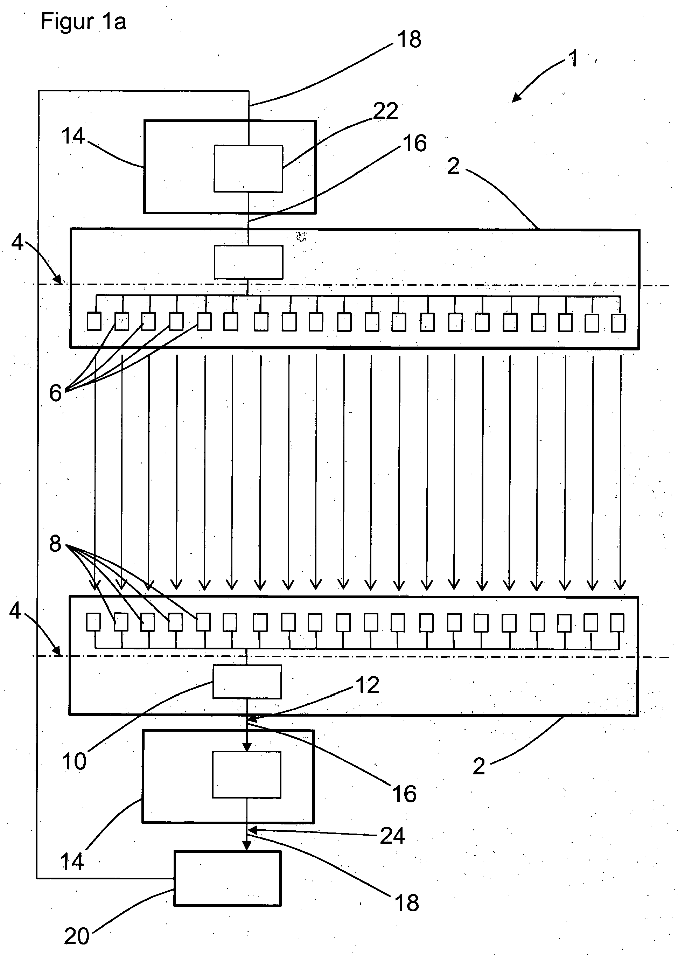

Figur 1a zeigt ein Lichtgitter 1 mit einem ersten Sensorkopfgehäuse 2 mit einer Gehäuselängsachse 4 mit mehreren Lichtsendern 6 und/oder mehreren Lichtempfängern 8, mindestens einer ersten Auswerteeinheit 10, welche in dem Sensorkopfgehäuse 2 angeordnet ist zur Auswertung von Empfangssignalen und zur Ausgabe von analogen oder digitalen Empfangsdaten 12, wobei ein zweites Gehäuse 14 vorgesehen ist, das mit dem Sensorkopfgehäuse 2 lösbar verbunden ist, wobei das Sensorkopfgehäuse 2 mittels einer ersten elektrischen Schnittstelle 16 nur mit dem zweiten Gehäuse 14 verbindbar ist und das zweite Gehäuse 14 mittels einer zweiten elektrischen Schnittstelle 18 an eine Maschinensteuerung 20 anschließbar ist, wobei das Sensorkopfgehäuse 2 um die Gehäuselängsachse 4 drehbar in dem zweiten Gehäuse 14 gelagert ist.

Die Maschinensteuerung 20 kann beispielsweise durch eine ,Speicher Programmierbare Steuerung' oder kurz SPS gebildet sein. Weiter kann es sich bei der Maschinensteuerung auch um eine sichere ,Speicher Programmierbare Steuerung' handeln.

Das dargestellte Lichtgitter 1 weist üblicherweise zwei Sensorkopfgehäuse 2 auf, wobei ein erstes Sensorkopfgehäuse 2 Lichtsender 6 und/oder Lichtempfänger 8 aufweist und ein zweites Sensorkopfgehäuse 2 zugeordnete Lichtempfänger 8 und/oder Lichtsender 6 aufweist. Die Sensorkopfgehäuse 2 des Lichtgitters 1 sind gegenüberliegend angeordnet, wobei jeweils ein Lichtsender 6 und ein gegenüberliegender Lichtempfänger 8 eine Lichtschranke bilden, wodurch zwischen den Sensorkopfgehäusen ein Schutzfeld gebildet wird. Werden die Lichtstrahlen unterbrochen, wird ein Objektfeststellungssignal ausgegeben.

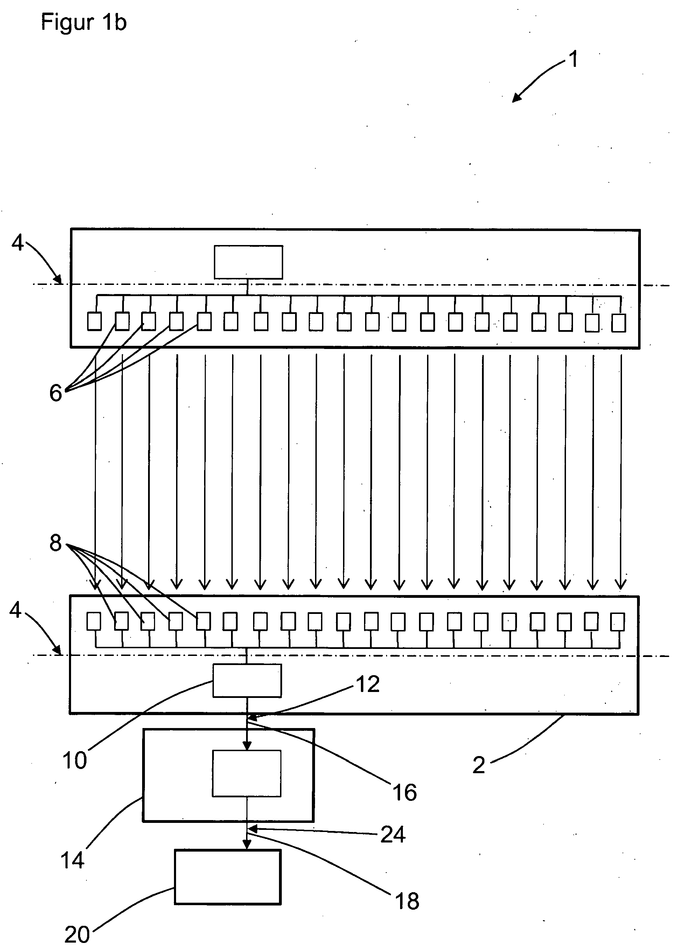

Figur 1b zeigt ein Lichtgitter 1 mit einem ersten Sensorkopfgehäuse 2 mit einer Gehäuselängsachse 4 mit mehreren Lichtempfängern 8, mindestens einer ersten Auswerteeinheit 10, welche in dem Sensorkopfgehäuse 2 angeordnet ist zur Auswertung von Empfangssignalen und zur Ausgabe von analogen oder digitalen Empfangsdaten 12, wobei ein zweites Gehäuse 14 vorgesehen ist, das mit dem Sensorkopfgehäuse 2 lösbar verbunden ist, wobei das Sensorkopfgehäuse 2 mittels einer ersten elektrischen Schnittstelle 16 nur mit dem zweiten Gehäuse 14 verbindbar ist und das zweite Gehäuse 14 mittels einer zweiten elektrischen Schnittstelle 18 an eine Maschinensteuerung 20 anschließbar ist, wobei das Sensorkopfgehäuse 2 um die Gehäuselängsachse 4 drehbar in dem zweiten Gehäuse 14 gelagert ist.

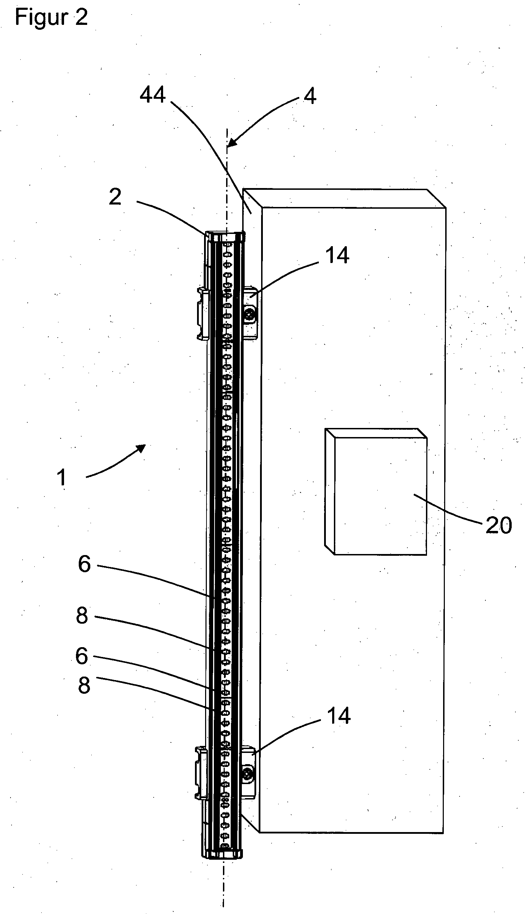

Figur 2 zeigt das Lichtgitter 1 aus Figur 1 mit dem ersten Sensorkopfgehäuse 2 mit der Gehäuselängsachse 4 mit mehreren Lichtsendern 6 und/oder mehreren Lichtempfängern 8 und das zweite Gehäuse 14, das mit dem Sensorkopfgehäuse 2 lösbar verbunden ist, wobei das Sensorkopfgehäuse 2 mittels einer ersten elektrischen Schnittstelle nur mit dem zweiten Gehäuse 14 verbindbar ist und das zweite Gehäuse 14 mittels einer zweiten elektrischen Schnittstelle an eine Maschinensteuerung 20 anschließbar ist, wobei das Sensorkopfgehäuse 2 um die Gehäuselängsachse 4 drehbar in dem zweiten Gehäuse 14 gelagert ist.

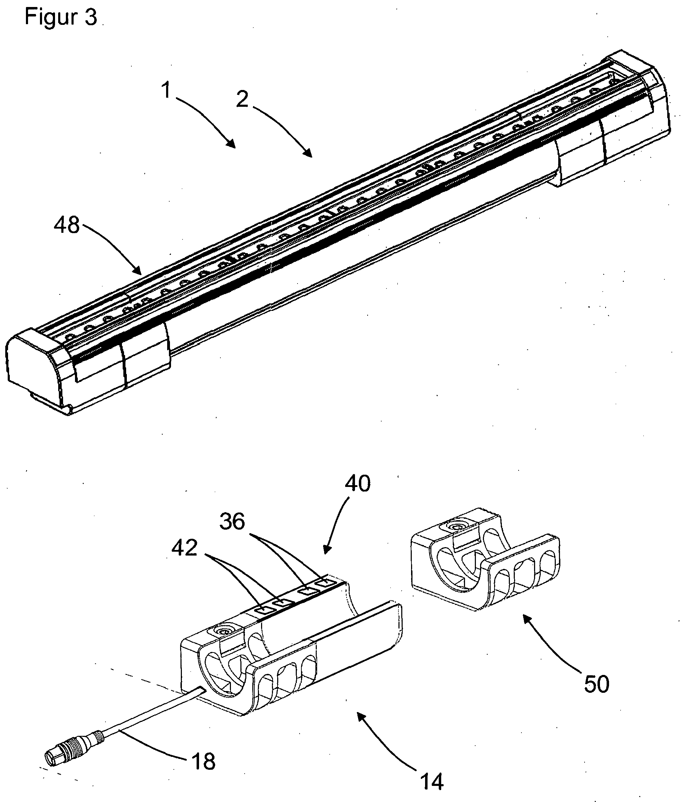

Figur 3 zeigt das Sensorkopfgehäuse 2 aus Figur 1 vor einer Montage in dem zweiten Gehäuse 14.

Das Sensorkopfgehäuse 2 besteht im Wesentlichen aus einem langgestreckten Hohlprofil, in dessen Inneren Optiken und elektronische Komponenten, nämlich wenigstens ein Lichtsender und/oder wenigstens ein Lichtempfänger angeordnet sind. Das Sensorkopfgehäuse weist an einer Seite eine für das von den Lichtsendern ausgesandte bzw. den Lichtempfängern zu empfangene Licht durchlässige Frontscheibe 48 auf, durch welche das Licht aus dem Sensorkopfgehäuse 2 austreten bzw. in das Sensorkopfgehäuse 2 eintreten kann. Das Sensorkopfgehäuse 2 ist an seinen jeweiligen kurzseitigen Enden mit Endkappen verschlossen. Die Anzahl der Lichtsender und/oder Lichtempfänger kann dabei beispielsweise 1 bis ca. 240 betragen. Das Sensorkopfgehäuse 2 kann eine Länge von ca. 100 mm bzw. 150 mm bis ca. 2000 mm aufweisen, wobei die Sensorkopfgehäuselänge beispielsweise in Schritten von ca. 100 mm oder 150 mm variieren kann.

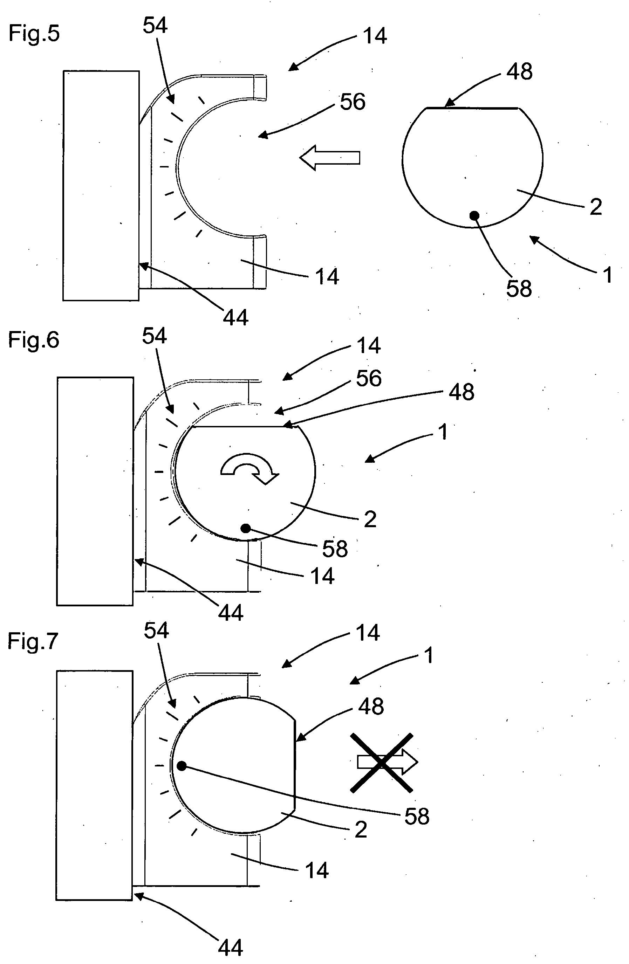

Figur 3 zeigt weiter das zweite Gehäuse 14 zum Befestigen und/oder Justieren des Sensorkopfgehäuses 2. Das zweite Gehäuse 14 weist eine Aufnahme mit einem teilrunden Gehäusequerschnitt auf für die Aufnahme des Sensorkopfgehäuses 2. Die Aufnahme bildet im Querschnitt einen Kreisabschnitt, wobei der Kreisabschnitt einen Winkel von mehr als 180 Grad aufweist, wobei das Sensorkopfgehäuse 2 in der Aufnahme angeordnet ist und von der Aufnahme zunächst durch Formschluss und zusätzlich durch Kraftschluss gehalten ist. Dies wird noch anhand der Figuren 5 bis 7 näher erläutert.

Zur mechanischen Stütze kann noch ein zusätzlicher Halter 50 vorgesehen sein. Insbesondere wenn das Sensorkopfgehäuse 2 sehr lang ausgeführt ist, sind weitere Halter 50 vorgesehen, um eine mechanisch stabile Montage zu ermöglichen. Der Halter 50 ist mechanisch in ähnlicher Weise wie das zweite Gehäuse 14 aufgebaut, wobei der Halter 50 jedoch keine gesonderte Ansteuereinheit oder Auswerteeinheit aufweist.

Gemäß Figur 1 und Figur 3 weist das zweite Gehäuse 14 eine Ansteuereinheit 22 auf für die Lichtsender 6 und/oder eine zweite Auswerteeinheit 40 zur Weiterverarbeitung der Empfangsdaten 12 und zur Ausgabe eines Objektfeststellungssignals 24 auf. Das Objektfeststellungssignal 24 kann dabei einkanalig oder auch zweikanalig, also redundant ausgeführt sein. Die Ansteuereinheit 22 bzw. die Auswerteeinheit 40 sind als sichere Steuerungen in Sinne von Maschinensicherheit ausgelegt. D.h. die Ansteuereinheit 22 bzw. die zweite Auswerteeinheit 40 verfügen über Mechanismen zur Fehlererkennung. Dies wird beispielsweise durch einen zweikanaligen selbstüberwachenden Aufbau gewährleistet. Dabei kann es sich um einen redundanten oder diversitären Aufbau handeln. Die Ansteuereinheit 22 bzw. die zweite Auswerteeinheit 40 erfüllen dadurch die Anforderungen von Sicherheitsnormen, wie beispielsweise der internationalen Norm IEC 61508 und sind dabei gemäß den dort definierten Sicherheitsleveln 2 und 3, nämlich SIL2 oder SIL3 ausgelegt. Dadurch kann das Lichtgitter 1, bestehend aus Sensorkopfgehäuse 2 und zweitem Gehäuse 14 in sicherheitskritischen Anwendungen eingesetzt werden.

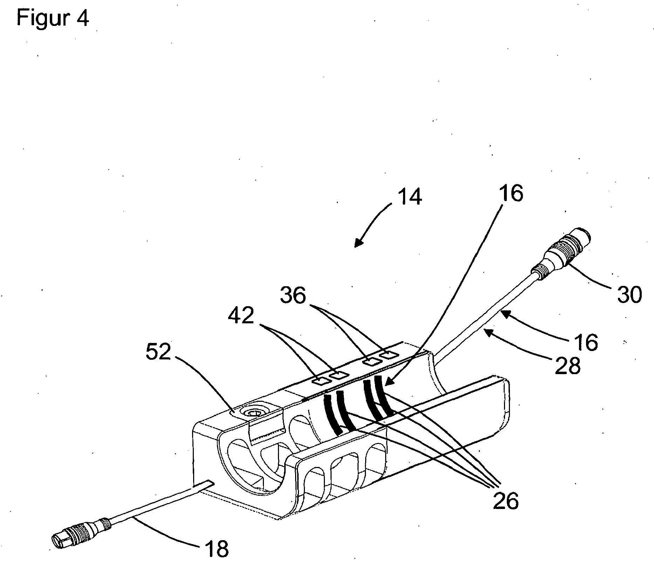

Die erste elektrische Schnittstelle 16 gemäß Figur 1 zwischen Sensorkopfgehäuse 2 und zweitem Gehäuse 14 ist beispielsweise durch Schleifkontakte 26 gebildet, wie in Figur 4 dargestellt. Durch die elektrische Schnittstelle 16 wird das Sensorkopfgehäuse 2 an das zweite Gehäuse 14 angekoppelt. Die Schleifkontakte 26 sind in der Aufnahme des zweiten Gehäuses angeordnet. Die zugehörigen gegenüberliegenden Schleifkontakte sind an der Außenseite des Sensorkopfgehäuses 2 angeordnet. Beispielsweise sind die Schleifkontakte 26 als längliche Streifen ausgebildet.

Alternativ zu den Schleifkontakten 26 kann die erste elektrische Schnittstelle 16 auch durch ein Kabel 28 mit mindestens einem Stecker 30 gebildet sein, wie in Figur 4 dargestellt. Das Kabel 28 verbindet das Sensorkopfgehäuse 2 mit dem zweiten Gehäuse 14. Das Kabel 28 wird dabei derart beweglich ausgeführt, dass das Sensorkopfgehäuse 2 in dem zweiten Gehäuse 14 beweglich, also justierbar angeordnet ist. Das Kabel 28 kann fest über einen Kabelschwanz mit dem Sensorkopfgehäuse 2 oder dem zweiten Gehäuse 14 verbunden sein. Das andere Ende wird dann mit dem gegenüberliegenden zweiten Gehäuse 14 bzw. dem Sensorkopfgehäuse 2 mit einem Stecker 30 verbunden.

Optional weist das zweite Gehäuse 14 eine dritte Schnittstelle oder eine vierte Schnittstelle auf. Mit diesen weiteren Schnittstellen oder Anschlüssen können weitere Signale eingelesen und/oder ausgeben werden. So können an das zweite Gehäuse 14 Muting-Sensoren, weitere kaskadierbare Teillichtgittersysteme oder andere Zusatzsensoren angeschlossen werden. Die dritte oder vierte oder weitere Schnittstellen können beispielsweise als Kabelschwanz mit Standard-Steckern ausgeführt sein.

Weiterhin weist das zweite Gehäuse gemäß Figur 3 und 4 Anzeigeelemente 36 auf. Die Anzeigeelemente 36 können durch eine oder mehrere Leuchtdioden und/oder durch eine oder mehrere Sieben-Segmentanzeigen und/oder durch eine LCD-Anzeige gebildet sein. Auch andere Anzeigetechnologien, wie beispielsweise organische Anzeigemittel wie OLED können vorgesehen sein.

Weiter kann das zweite Gehäuse Bedienelemente 42 aufweisen, wie in Figur 3 oder 4 dargestellt. Die Bedienelemente 42 können für die Konfiguration oder zur Abfrage von Statusmeldungen vorgesehen sein. Die Bedienelemente 42 können durch Tasten oder Schalter gebildet sein. Dabei sind Folientaster/-schalter oder auch Berührungstasten vorgesehen, welche kapazitiv oder optisch funktionieren. Die Bedienelemente 42 sind beispielsweise an einer gut zugänglichen Seite des zweiten Gehäuses 14 angeordnet. Beispielsweise an der Frontseite, an der das Sensorkopfgehäuse 2 eingefügt wird.

Mit der zweiten Schnittstelle 18 ist das zweite Gehäuse 14 mit der Maschinensteuerung 20 verbunden, wie in Figur 1 dargestellt. Die zweite Schnittstelle 18 ist beispielsweise durch einen Feldbus, insbesondere durch einen sicheren Feldbus gebildet. Bekannte Feldbussysteme sind beispielsweise Profibus, Interbus. Beispiele für sichere Feldbusse sind Profibus Safe, Interbus Safe oder sichere Feldbusse von anderen Herstellern. Die zweite Schnittstelle 18 kann darüber hinaus auch durch ein sicheres Ethernet oder durch eine fachübliche Sensorverbindung wie IO-Link nichtsicherheitsgerichtet oder sicherheitsgerichtet erfolgen. Weitere Beispiele für die zweite Schnittstelle sind ASI oder ASI Safety.

Figur 5 bis Figur 7 zeigt ein Verfahren zum Befestigen und/oder Justieren des Sensorkopfgehäuses 2 in dem zweiten Gehäuse 14.

Das Sensorkopfgehäuse 2 wird zunächst seitlich, so dass die Frontscheibe 48, also der flache Teil des Sensorkopfgehäuses 2 zur Seite hin zeigt, in das zweite Gehäuse 14 eingeschoben. Auch der der Frontscheibe gegenüberliegende Teil des Sensorkopfgehäuses kann eine flache Seite aufweisen. Sobald sich das Sensorkopfgehäuse 2 in der Aufnahme des zweiten Gehäuses 14 befindet, wird das Sensorkopfgehäuse 2 entlang einer Gehäuselängsachse um 90 Grad gedreht, so dass die Frontscheibe 48 von dem zweiten Gehäuse 14 weg zeigt. Durch diese Bewegung wird das Sensorkopfgehäuse 2 mit dem teilrunden Gehäuseabschnitt in der Aufnahme des zweiten Gehäuses 14 gedreht. Die Aufnahme des zweiten Gehäuses 14 ist dabei geringfügig kleiner ausgebildet, so dass das Sensorkopfgehäuse 2 während der Drehung durch Kraftschluss in dem zweiten Gehäuse 14 gehalten wird. Dadurch, dass die Aufnahme des zweiten Gehäuses 14 im Querschnitt einen Kreisabschnitt mit einem Winkel von mehr als 180 Grad aufweist, kann das Sensorkopfgehäuse 2 nur um 90° gedreht in das zweite Gehäuse 14 eingeschoben werden und kann nach einer Drehung von ca. 90 Grad auch nicht mehr direkt in Richtung der Öffnung des zweiten Gehäuses 14 gelöst werden oder herausfallen, wodurch ein Formschluss gebildet ist. Dadurch wird das Sensorkopfgehäuse 2 zunächst allein durch das zweite Gehäuse 14 durch Kraftschluss gehalten. Die offene Aufnahme mit einem Kreisabschnitt mit einem Winkel von mehr als 180 Grad weist insbesondere einen Winkel von weniger als 210 Grad auf und insbesondere weniger als 235 Grad, je nachdem wie groß der abgeflachte Teil des Sensorkopfgehäuse durch die Frontscheibe 48 ausgebildet ist.

In dieser Position kann das Sensorkopfgehäuse 2 nun in einem Winkel von ca. +/- 15 Grad um die Gehäuselängsachse gedreht werden, um das Lichtgitter 1 auszurichten. Während dieser Justage wird das Sensorkopfgehäuse 2 in jeder gewünschten gedrehten Position durch Kraftschluss gehalten, so dass eine Justage überprüft werden kann.

Das zweite Gehäuse 14 selbst ist mit Schrauben oder anderen Befestigungsmitteln an einer Montagefläche 44, beispielsweise einem Maschinenrahmen oder dergleichen befestigt. Zum Befestigen oder Lösen des Sensorkopfgehäuses 2 von dem zweiten Gehäuse 14 braucht das zweite Gehäuse 14 selbst nicht von der Montagefläche gelöst werden. Das zweite Gehäuse 14 bleibt an der Montagefläche befestigt, so dass die Position des Sensorkopfgehäuses 2 in der Aufnahme festgelegt ist. Dadurch ist das Sensorkopfgehäuse 2 bei einem Tausch in seiner Lage bereits vorjustiert.

Weiter ist an dem zweiten Gehäuse 14 ein Klemmteil 52 mittels einer Schraube befestigt, wie in Figur 4 dargestellt. Das Klemmteil 52 ist an einer Seite der offenen Aufnahme des zweiten Gehäuses 14 angeordnet und über eine Schraube mit dem zweiten Gehäuse 14 verbunden. Das Klemmteil weist an seiner Unterseite, die zum zweiten Gehäuse hin zeigt, eine schräge Fläche auf. Die schräge Fläche ist so ausgebildet, dass das Klemmteil 52 an der Seite zur Aufnahme hin kürzer ist als die dazu gegenüberliegende Seite. Dadurch wird das Klemmteil 52 beim Einschrauben in das zweite Gehäuse 14 in Richtung der Aufnahme und damit in Richtung des Sensorkopfgehäuses 2 gekippt, so dass das Sensorkopfgehäuse 2 in dem zweiten Gehäuse 14 durch das Klemmteil 52 geklemmt wird. Dadurch kann das Sensorkopfgehäuse 2 in dem zweiten Gehäuse 14 final in seiner Endlage durch einen zusätzlichen Kraftschluss positioniert werden, nach dem das Sensorkopfgehäuse 2 justiert worden ist.

Wie in Figur 4 dargestellt, weist das zweite Gehäuse 14 Befestigungsöffnungen auf, die senkrecht zueinander sind, die jeweils eine alternative Befestigung des zweiten Gehäuses 14 mit der Montagefläche ermöglichen, wobei die Montage des zweiten Gehäuses 14 alternativ in jeweils zwei zueinander senkrechten Richtungen erfolgen kann. Das zweite Gehäuse 14 kann dadurch an einer ersten oder alternativ einer dazu senkrechten zweiten Seite mit der Montagefläche verbunden werden. Dadurch ist die Position des zweiten Gehäuses 14 flexibel wählbar an einer Montagefläche. Dadurch kann das zweite .Gehäuse 14 flexibel eingesetzt werden. Die Befestigungsöffnungen dienen zur Aufnahme von Befestigungsschrauben oder anderen Befestigungsmitteln.

Wie bereits erläutert, wird gemäß Figur 5 das Sensorkopfgehäuse 2 in der Aufnahme um 90° in Pfeilrichtung gedreht und von der Aufnahme gemäß Figur 7 durch Kraftschluss gehalten. An der Stirnseite des zweiten Gehäuses ist eine Winkelskala 54 angeordnet, um das Sensorkopfgehäuse 2 zu justieren. Mit Hilfe einer Positionsmarke 58 an dem Sensorkopfgehäuse 2 kann eine bestimmte Drehposition, eingestellt auf einen bestimmten Winkel, an der Winkelskala 54 abgelesen werden und jederzeit erneut exakt eingestellt werden, beispielsweise bei einem Austausch des Sensorkopfgehäuses 2.

### Bezugszeichen:

1 Lichtgitter
2 Sensorkopfgehäuse
4 Gehäuselängsachse
6 Lichtsender
8 Lichtempfänger
10 erste Auswerteeinheit
12 Empfangsdaten
14 zweites Gehäuse
16 erste elektrische Schnittstelle
18 zweite elektrische Schnittstelle
20 Maschinensteuerung
22 Ansteuereinheit
24 Objektfeststellungssignal
26 Schleifkontakte
28 Kabel
30 Stecker
36 Anzeigeelemente
40 zweite Auswerteeinheit
42 Bedienelemente
44 Montagefläche
48 Frontscheibe
50 Halter
52 Klemmteil
54 Winkelskala
56 Aufnahme
58 Positionsmarke

## Patentansprüche

1. Lichtgitter mit einem ersten Sensorkopfgehäuse (2) mit einer Gehäuselängsachse (4) mit mehreren Lichtsendern (6) und/oder mehreren Lichtempfängern (8), mindestens einer ersten Auswerteeinheit (10), welche in dem Sensorkopfgehäuse (2) angeordnet ist zur Auswertung von Empfangssignalen und zur Ausgabe von analogen oder digitalen Empfangsdaten (12),
wobei ein zweites Gehäuse (14) vorgesehen ist, das mit dem Sensorkopfgehäuse (2) lösbar verbunden ist, wobei das Sensorkopfgehäuse (2) mittels einer ersten elektrischen Schnittstelle (16) nur mit dem zweiten Gehäuse (14) verbindbar ist und das zweite Gehäuse (14) mittels einer zweiten elektrischen Schnittstelle (18) an eine Maschinensteuerung (20) anschließbar ist,
wobei
das zweite Gehäuse (14) eine Ansteuereinheit (22) für die Lichtsender (6) und/oder eine zweite Auswerteeinheit (40) zur Weiterverarbeitung der Empfangsdaten (12) und zur Ausgabe eines Objektfeststellungssignals (24) aufweist, **dadurch gekennzeichnet, dass**
die Ansteuereinheit (22) und/oder die Auswerteeinheit (40) als sichere Steuerungen im Sinne von Maschinensicherheit ausgelegt sind und das Sensorköpfgehäuse (2) um die Gehäuselängsachse (4) drehbar in dem zweiten Gehäuse (14) gelagert ist, wobei das zweite Gehäuse (14) eine Aufnahme (56) mit einem teilrunden Gehäusequerschnitt aufweist für die Aufnahme des Sensorkopfgehäuses (2), wobei die Aufnahme (56) im Querschnitt einen Kreisabschnitt bildet, wobei der Kreisabschnitt einen Winkel von mehr als 180° aufweist, wobei das Sensorkopfgehäuse (2) in der Aufnahme (56) angeordnet ist und von der Aufnahme (56) zunächst durch Formschluss und zusätzlich durch Kraftschluss gehalten ist.

2. Lichtgitter nach Anspruch 1, **dadurch gekennzeichnet, dass** das zweite Gehäuse (14) eine Speichereinheit aufweist.

3. Lichtgitter nach einem der vorhergehenden Ansprüche, **dadurch gekennzeichnet, dass** die erste elektrische Schnittstelle (16) zwischen Sensorkopfgehäuse (2) und zweitem Gehäuse (14) durch Schleifkontakte (26) gebildet ist.

4. Lichtgitter nach einem der vorhergehenden Ansprüche 1 bis 2, **dadurch gekennzeichnet, dass** die erste elektrische Schnittstelle (16) durch ein Kabel (28) mit mindestens einem Stecker (30) gebildet ist.

5. Lichtgitter nach einem der vorhergehenden Ansprüche, **dadurch gekennzeichnet, dass** das zweite Gehäuse (14) eine dritte Schnittstelle oder eine vierte Schnittstelle aufweist.

6. Lichtgitter nach Anspruch 5, **dadurch gekennzeichnet, dass** an die dritte oder vierte Schnittstelle ein weiteres Sensorkopfgehäuse, insbesondere kaskadierbares Teillichtgitter angeschlossen ist zur Bildung einer Lichtgitterkaskade mit den Sensorkopfgehäusen.

7. Lichtgitter nach Anspruch 5, **dadurch gekennzeichnet, dass** an die dritte oder vierte Schnittstelle mindestens ein Sicherheitssensor mittels redundanter Sicherheitsausgänge anschließbar ist.

8. Lichtgitter nach Anspruch 5, **dadurch gekennzeichnet, dass** an die dritte oder vierte Schnittstelle mindestens ein Sicherheitslaserscanner mittels redundanter Sicherheitsausgänge anschließbar ist.

9. Lichtgitter nach Anspruch 5, **dadurch gekennzeichnet, dass** an der dritten oder vierten Schnittstelle wenigstens ein Sensor, insbesondere wenigstens ein Mutingsensor mittels wenigstens einem Ausgang anschließbar ist.

10. Lichtgitter nach einem der vorhergehenden Ansprüche, **dadurch gekennzeichnet, dass** das zweite Gehäuse (14) Bedienelemente (42) und/oder Anzeigeelemente (36) aufweist.

11. Lichtgitter nach Anspruch 2, 5 und 10, **dadurch gekennzeichnet, dass** eine in der Speichereinheit des zweiten Gehäuses (14) gespeicherte Parametrierung durch Übertragungsmittel auf ein weiteres an der dritten oder vierten Schnittstelle temporär angeschlossenes zweites Gehäuse übertragbar ist, wobei der Übertragungsvorgang durch eine Codeeingabe an den Bedienelementen startbar ist.

12. Lichtgitter nach einem der vorhergehenden Ansprüche, **dadurch gekennzeichnet, dass** die zweite Schnittstelle (18) durch einen Feldbus, insbesondere durch einen sicheren Feldbus gebildet ist.

## Claims

1. A light grid comprising a first sensor head housing (2) having a longitudinal housing axis (4) having a plurality of light transmitters (6) and/or a plurality of light receivers (8), and at least one first evaluation unit (10) which is arranged in the sensor head housing (2) for evaluating received signals and for outputting analog or digital received data (12),
wherein a second housing (14) is provided which is releasably connected to the sensor head housing (2), with the sensor head housing (2) only being connectable to the second housing (14) by means of a first electrical interface (16) and with the second housing (14) being connectable to a machine control (20) by means of a second electrical interface (18); wherein the second housing (14) has a control unit (22) for the light transmitters (6) and/or has a second evaluation unit (40) for further processing the received data (12) and for outputting an object detection signal (24),
**characterized in that**
the control unit (22) and/or the evaluation unit (40) are designed as secure controls in the sense of machine security;
and **in that** the sensor head housing (2) is rotatably supported about the longitudinal housing axis (4) in the second housing (14), with the second housing (14) having a mount (56) having a partly round housing cross-section for the reception of the sensor head housing (2), with the mount (56) forming a circular section in cross-section, with the circular section having an angle of more than 180°, and with the senor head housing (2) being arranged in the mount (36) and being held by the mount (56) first by shape matching and additionally by force transmission.

2. A light grid in accordance with claim 1, **characterized in that** the second housing (14) has a memory unit.

3. A light grid in accordance with one of the preceding claims, **characterized in that** the first electrical interface (16) is formed between the sensor head housing (2) and the second housing (14) by sliding contacts (26).

4. A light grid in accordance with one of the preceding claims 1 to 2, **characterized in that** the first electrical interface (16) is formed by a cable (28) having at least one plug (30).

5. A light grid in accordance with any one of the preceding claims, **characterized in that** the second housing (14) has a third interface or a fourth interface.

6. A light grid in accordance with claim 5, **characterized in that** a further sensor head housing, in particular a cascadable partial light grid, is connected to the third or fourth interface for forming a light grid cascade with the sensor head housings.

7. A light grid in accordance with claim 5, **characterized in that** at least one safety sensor is connectable to the third or fourth interface by means of redundant safety outputs.

8. A light grid in accordance with claim 5, **characterized in that** at least one safety laser scanner is connectable to the third or fourth interface by means of redundant safety outputs.

9. A light grid in accordance with claim 5, **characterized in that** at least one sensor, in particular at least one muting sensor, is connectable to the third or fourth interface by means of at least one output.

10. A light grid in accordance with any one of the preceding claims, **characterized in that** the second housing (14) has operating elements (42) and/or display elements (36).

11. A light grid in accordance with claim 2, claim 5 and claim 10, **characterized in that** a parameterization stored in the memory unit of the second housing (14) can be transmitted by transmission means to a further second housing temporarily connected to the third or fourth interface, with the transmission process being able to be started by a code input at the operating elements.

12. A light grid in accordance with any one of the preceding claims, **characterized in that** the second interface (18) is formed by a field bus, in particular by a safe field bus.

## Revendications

1. Barrière lumineuse comprenant un premier boîtier pour tête de capteur (2) présentant un axe longitudinal de boîtier (4) et comprenant plusieurs émetteurs de lumière (6) et/ou plusieurs récepteurs de lumière (8), au moins une première unité d'évaluation (10), qui est agencée dans le boîtier pour tête de capteur (2) pour l'évaluation de signaux de réception et pour délivrer des données de réception analogiques ou numériques (12),
dans laquelle il est prévu un second boîtier (14), qui est relié de façon détachable avec le boîtier pour tête de capteur (2), dans laquelle le boîtier pour tête de capteur (2) est susceptible d'être relié, au moyen d'une première interface électrique (16), uniquement avec le second boîtier (14) et le second boîtier (14) est susceptible d'être connecté à une commande de machine (20) au moyen d'une seconde interface électrique (18),
dans laquelle
le second boîtier (14) comprend une unité de pilotage (22) pour les émetteurs de lumière (6) et/ou une seconde unité d'évaluation (40) pour la poursuite du traitement des données de réception (12) et pour délivrer un signal de constatation d'objet (24),
**caractérisée en ce que**
l'unité de pilotage (22) et/ou l'unité d'évaluation (40) sont conçues sous forme de commandes de sécurité dans le sens de la sécurité de la machine, et
le boîtier pour tête de capteur (2) est monté dans le second boîtier (14) avec faculté de rotation autour de l'axe longitudinal de boîtier (4), dans laquelle le second boîtier (14) comprend un récepteur (56) présentant une section transversale partiellement ronde pour la réception du boîtier pour tête de capteur (2), dans laquelle le récepteur (56) forme en section transversale un tronçon circulaire, tel que le tronçon circulaire englobe un angle de plus de 180°, et le boîtier pour tête de capteur (2) est agencé dans le récepteur (56) et est maintenu par le récepteur (56) tout d'abord par coopération de formes et additionnellement par coopération de forces.

2. Barrière lumineuse selon la revendication 1, **caractérisée en ce que** le second boîtier (14) comprend une unité à mémoire.

3. Barrière lumineuse selon l'une des revendications précédentes, **caractérisée en ce que** la première interface électrique (16) est formée entre le boîtier pour tête de capteur (2) et le second boîtier (14) par des contacts frottants (26).

4. Barrière lumineuse selon l'une des revendications précédentes 1 et 2, **caractérisée en ce que** la première interface électrique (16) est formée par un câble (28) avec au moins une prise (30).

5. Barrière lumineuse selon l'une des revendications précédentes, **caractérisée en ce que** le second boîtier (14) comprend une troisième interface ou une quatrième interface.

6. Barrière lumineuse selon la revendication 5, **caractérisée en ce qu'**un autre boîtier pour tête de capteur, en particulier une barrière lumineuse partielle capable d'être branchée en cascade, est raccordé à la troisième ou à la quatrième interface pour former une cascade de barrières lumineuses avec les boîtiers pour tête de capteur.

7. Barrière lumineuse selon la revendication 5, **caractérisée en ce qu'**au moins un capteur de sécurité est susceptible d'être branché à la troisième ou à la quatrième interface au moyen de sorties de sécurité redondantes.

8. Barrière lumineuse selon la revendication 5, **caractérisée en ce qu'**au moins un scanner à laser de sécurité est susceptible d'être branché à la troisième ou à la quatrième interface au moyen de sorties de sécurité redondantes.

9. Barrière lumineuse selon la revendication 5, caractérisée en en ce qu'au moins un capteur, en particulier au moins un capteur d'inhibition est susceptible d'être branché à la troisième ou à la quatrième interface, au moyen d'au moins une sortie.

10. Barrière lumineuse selon l'une des revendications précédentes, **caractérisée en ce que** le second boîtier (14) comporte des éléments d'actionnement (42) et/ou des éléments d'affichage (36).

11. Barrière lumineuse selon la revendication 2, 5 et 10, **caractérisée en ce qu'**un paramétrage mémorisé dans l'unité à mémoire du second boîtier (14) est susceptible d'être transmis, par des moyens de transmission, à un autre second boîtier raccordé temporairement à la troisième ou à la quatrième interface, le processus de transmission pouvant être démarré par l'entrée d'un code dans les éléments d'actionnement.

12. Barrière lumineuse selon l'une des revendications précédentes, **caractérisée en ce que** la seconde interface (18) est formée par un bus de champ, en particulier par un bus de champ sécurisé.
